# FASCICULE DE BREVET EUROPEEN

(11) **EP 2 168 812 B1**
(45) Date de publication et mention de la délivrance du brevet: **12.07.2023**
(21) Numéro de dépôt: 09170794.3
(22) Date de dépôt: 21.09.2009
(51) Int. Cl.: B60Q 1/08, F21S 41/663

(54) **SYSTÈME D'ÉCLAIRAGE POUR VÉHICULE AUTOMOBILE APTE À MODIFIER L'ÉMISSION D'UN FAISCEAU LUMINEUX DE TYPE CODE**
BELEUCHTUNGSSYSTEM FÜR EIN KRAFTFAHRZEUG, DAS DIE EMISSION EINES ABBLENDLICHTS VERÄNDERN KANN
LIGHTING SYSTEM FOR AN AUTOMOBILE CAPABLE OF MODIFYING THE EMISSION OF A LOW BEAM LIGHT

(30) Priorité: 26.09.2008 FR 0805331
(43) Date de publication de la demande: 31.03.2010
(73) Titulaire: VALEO VISION, 93012 Bobigny (FR)
(72) Inventeur: Reiss, Benoît, 95600 Eaubonne (FR)
(74) Mandataire: Valeo Visibility

(56) Documents cités:
- EP-A- 1 762 431
- EP-A2- 2 103 867
- DE-A1-102005 041 234
- FR-A- 2 797 614
- FR-A1- 2 787 863
- FR-A1- 2 889 869
- GB-A- 2 443 737
- JP-A- 2001 001 832
- US-A1- 2005 094 413
- US-A1- 2007 201 241
- US-A1- 2008 007 961

## Description

L'invention est du domaine des dispositifs d'éclairage pour véhicule automobile notamment, et relève plus particulièrement des modalités de mise en oeuvre des projecteurs équipant de tels véhicules. Elle a pour objet un système d'éclairage pour adapter les caractéristiques de l'éclairage émis par un projecteur lorsque le véhicule progresse sur une voie de circulation, en fonction d'une observation du trafic sur ladite voie de circulation et/ou de l'environnement proche du véhicule. Les caractéristiques d'éclairage relèvent notamment des performances et des aptitudes du projecteur relatives à la portée et/ou à l'intensité lumineuse du ou des faisceaux lumineux qu'il émet.

Les projecteurs automobiles sont composés dans leur généralité d'un boîtier qui est fermé par une glace transparente à travers laquelle sont émis un ou plusieurs faisceaux lumineux. Ce boîtier loge au moins un module d'éclairage, comprenant principalement une source lumineuse et des moyens optique apte à modifier au moins un paramètre de la lumière générée par la source lumineuse pour l'émission du faisceaux lumineux par le module d'éclairage. Ces moyens optiques comprennent des composants optiques qui sont, par exemple, des réflecteurs, des lentilles, des éléments diffusants ou des collimateurs, voire tout autre organe apte à modifier au moins l'un des paramètres de la lumière générée par la source lumineuse, tel que sa réflexion moyenne et/ou sa direction. Le ou les modules d'éclairage sont susceptibles d'être conjointement logés à l'intérieur d'un même projecteur ou d'être répartis dans des projecteurs qui leurs sont spécifiquement dédiés. Ces modules d'éclairage permettent d'éclairer la voie sur laquelle circule le véhicule en fonction du trafic. Parmi les différents modules d'éclairage, on trouve essentiellement ceux, isolément ou en combinaison, qui sont aptes à émettre divers faisceaux lumineux selon l'éclairage de la voie de circulation pour des conditions de trafic détectées.

La détection des conditions de trafic met par exemple en oeuvre des moyens optoélectroniques, tels que caméra ou analogue équipant le véhicule spécifiquement pour le fonctionnement des projecteurs et/ou pour d'autres équipements du véhicule. D'autres moyens de détection, tels que par communication satellitaire et/ou cellulaire peuvent être exploités, préférentiellement en association avec les moyens optoélectroniques. Divers moyens de calculs peuvent être associés aux moyens de détection pour corriger les informations qu'ils fournissent.

Parmi les différents faisceaux émis par le ou les projecteurs logeant les différents modules d'éclairage, on trouve habituellement :
- des feux de position d'intensité et de portée faible,
- des feux de croisement à ligne de coupure, ou codes, d'intensité plus forte et de portée courante sur la route de l'ordre de 60 m à 80 m. Les feux de croisement sont essentiellement utilisés la nuit. La répartition du faisceau lumineux est agencée pour ne pas éblouir le conducteur d'un véhicule circulant en sens inverse, tout en favorisant un éclairage latéral orienté vers la bordure de la voie opposée à celle de la voie de circulation inverse. En outre, la portée sur la route des feux de croisement est adaptée pour ne pas éblouir le conducteur d'un véhicule circulant à l'avant sur une même voie de circulation, ou sur une voie de circulation voisine suivant un même sens de circulation, tel qu'en cas de doublement du véhicule.
- des feux de route longue portée, dont la portée courante sur la route est de l'ordre de 200 m avec une forte intensité lumineuse du faisceau émis. De tels feux de route doivent être éteints lorsque l'on croise un véhicule circulant sur une voie de circulation inverse ou lorsque un véhicule est placé à l'avant sur la même voie de circulation ou sur une voie de circulation voisine suivant un même sens de circulation, pour ne pas éblouir les autres conducteurs.
- des feux antibrouillard de courte portée, prévus pour éclairer les bordures de la voie de circulation en cas de conditions climatiques défavorables.

Un projecteur est susceptible de loger un ou plusieurs modules d'éclairage affectés à l'émission de l'un au moins des faisceaux lumineux. Par exemple, le projecteur loge plusieurs modules d'éclairage qui sont chacun agencés pour émettre un faisceau lumineux respectif, feu de croisement à ligne de coupure, feu de route à longue portée et feu antibrouillard.

Il est aussi connu, à titre d'exemple, des projecteurs logeant au moins un module d'éclairage bi-fonction, qui est apte à émettre à partir d'un même système optique sélectivement divers faisceaux lumineux, et plus particulièrement soit un feu route soit un feux de croisement. Un cache est monté mobile à l'intérieur du boîtier du projecteur entre deux positions alternatives dans lesquelles :
- soit le cache mobile est placé devant le système optique du projecteur pour occulter partiellement la lumière qu'il produit selon une limite dite ligne de coupure, pour induire l'émission par le projecteur d'un faisceau lumineux du type feu de croisement.
- soit le cache mobile est placé en position d'escamotage pour autoriser l'émergence hors du boîtier de la totalité de la lumière émise par le système optique. Dans une telle position d'escamotage du cache mobile, le projecteur est apte à émettre un faisceau lumineux du type feu de route.

Par ailleurs, en vue d'améliorer le confort du conducteur en vision de nuit, il a été proposé d'adapter selon les besoins la portée et/ou l'intensité des feux de croisement ou des feux de route pour optimiser l'éclairage potentiel de la voie de circulation. Par exemple, il a été proposé une fonction dite faisceau d'autoroute (Motorway Light en anglais) et une fonction dite feu de ville (Town Light en anglais). Ces fonctions consistent à modifier la portée et/ou l'intensité lumineuse courantes des feux de croisement, selon la voie de circulation empruntée par le véhicule et/ou selon les conditions d'éclairage de l'environnement extérieur du véhicule. Plus particulièrement, lorsqu'un véhicule circule sur une voie à circulation rapide, telle qu'une autoroute ou voie de circulation analogue, il est opportun d'accroître la portée courante des feux de croisement, pour faire porter efficacement au plus loin le faisceau lumineux émis (fonction faisceau d'autoroute). A contrario, il est opportun de diminuer légèrement la portée et d'élargir les faisceaux émis par les feux de croisement lorsque le véhicule circule à proximité en environnement extérieurement éclairé, tel qu'en milieu urbain par exemple (fonction feu de ville). On pourra par exemple se reporter au brevet EP-1 923 262, qui expose des modalités permettant d'adapter la portée d'un faisceau émis par un feu de croisement.

Une autre fonction a été proposée, qui consiste à modifier les caractéristiques d'un faisceau lumineux émis par un projecteur selon la configuration de la voie de circulation. Par exemple, il est connu la fonction dite faisceau tournant (BL pour Bending Light en anglais) qui peut se décomposer en une fonction dite lumière virage mobile (Dynamic Bending Light en anglais) et une fonction dite lumière virage fixe (FBL pour Fixed Bending Light en anglais). La fonction faisceau tournant permet de modifier l'orientation d'un faisceau lumineux produit par une source lumineuse, de sorte que lorsque le véhicule aborde un virage, la route soit éclairée de façon optimale. La fonction lumière virage fixe permet d'éclairer progressivement le bas côté de la route lorsque le véhicule effectue un virage.

D'autres fonctions visant à accroître la sécurité et/ou le confort de la vision de nuit du conducteur ont été proposées, et les concepteurs du domaine automobile et/ou des domaines connexes recherchent d'une manière générale à modifier la portée et/ou l'intensité lumineuse des faisceaux lumineux émis par les projecteurs automobiles selon leur fonction habituelle. Cependant, les aménagements proposés doivent prendre en compte le cadre de la ou des différentes réglementations relatives à la circulation des véhicules sur voie publique, notamment en ce qui concerne l'interdiction d'éblouir les autres usagers des voies de circulation automobile, que ceux-ci circulent sur une voie à sens de circulation inverse ou sur une voie suivant un même sens de circulation.

US 2007/201241 A1 divulgue un système d'éclairage pour véhicule automobile selon le préambule de la revendication 1.

Le but de la présente invention est de proposer un système d'éclairage apte à adapter les caractéristiques d'un faisceau lumineux code émis par un module d'éclairage logé dans le boîtier d'un projecteur, ainsi qu'un procédé de mise en oeuvre d'un tel système d'éclairage. Il est plus particulièrement visé par la présente invention de permettre une telle modification des caractéristiques du faisceau lumineux code lorsque le véhicule progresse sur une voie de circulation, en fonction d'une observation du trafic sur ladite voie de circulation et/ou de l'environnement proche du véhicule. Les caractéristiques d'éclairage relèvent notamment des performances et des aptitudes des projecteurs relatives à la portée, à l'amplitude et/ou à l'intensité lumineuse des faisceaux lumineux qu'ils émettent.
Parmi les contraintes prises en compte par la présente invention, réside celle de l'installation des diverses fonctions d'éclairage et/ou d'émission d'un ou de plusieurs faisceaux lumineux que procure un projecteur, qui doit pourvoir être obtenue à moindres coûts. L'accroissement du confort offert au conducteur par les dispositions proposées par la présente invention ne doit pas induire un surcoût rédhibitoire du ou des projecteurs que comprend le système d'éclairage, à l'encontre de leur commercialisation dans un secteur très concurrentiel. L'agencement et l'organisation des modalités permettant l'installation de ces diverses fonctions d'éclairage ne doit pas non plus être une contrainte susceptible de porter atteinte à l'esthétique générale du ou des projecteurs utilisés, ni complexifier leur structure outre mesure, notamment par l'apport d'un appareillage mécanique complexe. L'encombrement général du projecteur doit demeurer raisonnable au regard de son implantation sur le véhicule, et les modalités de cette installation sont souhaitées les plus standardisées possibles pour être adaptables à divers projecteurs susceptibles d'offrir respectivement différentes fonctions d'émission de faisceaux lumineux. En outre, Il est opportun que les modifications de portées, d'orientations et/ou d'intensité lumineuse des faisceaux lumineux émis par les projecteurs soient conçues pour améliorer le confort apporté au conducteur, non seulement au regard des fonctions de confort anciennement ou nouvellement procurées, mais aussi au regard de leur mise en oeuvre. Il est réputé que la conduite de nuit induit une fatigue pour le conducteur qu'il est souhaitable de lui épargner, à partir d'une émission des différents faisceaux et d'un apport des différentes fonctions de confort qui limitent la gêne occasionnée par le passage de l'un à l'autre des faisceaux et/ou fonctions.

L'invention a pour objet un système d'éclairage pour véhicule automobile comprenant au moins un projecteur logeant au moins un module d'éclairage associant au moins une source lumineuse associée à des moyens optiques pour l'émission d'un faisceau lumineux, au moins l'un des modules d'éclairage étant un module d'éclairage code pour l'émission d'un faisceau lumineux code comportant une première ligne de coupure oblique à double paliers sensiblement horizontaux dont un palier inférieur et un palier supérieur. Ce système comprend en outre au moins un module d'éclairage complémentaire, qui est agencé pour émettre un faisceau d'autoroute comportant une deuxième ligne de coupure alignée sur le palier inférieur de la première ligne de coupure, la source lumineuse du module d'éclairage complémentaire étant composée d'au moins une DEL activable en fonction de l'observation du trafic, notamment de la distance avec les autres véhicules dans un environnement proche, pour modifier les caractéristiques du faisceau lumineux émis par le ou les module(s) d'éclairage code et accroître la portée du faisceau lumineux émis par le ou les module(s) d'éclairage code.

Le faisceau code peut être obtenu soit avec un seul module d'éclairage code, soit par une combinaison de, notamment deux, modules d'éclairage code. On peut ainsi avoir un module code unique, qui, à lui seul, est apte à émettre un faisceau code réglementaire, ou préférer superposer plusieurs faisceaux partiels, chaque faisceau partiel provenant d'un module spécifique. Soit, dans le cas où on a recours à plusieurs modules optiques, chacun des faisceaux partiels émis présente la coupure à double palier sensiblement horizontaux, soit une des modules émet le faisceau à double palier, et un ou plusieurs autres modules viennent compléter le faisceau, en présentant eux mêmes simplement une coupure plate, plus facile à obtenir qu'une coupure à double palier.

Selon une variante, le module complémentaire est apte à s'allumer progressivement ou instantanément. On comprend par cela le fait que ce module peut comporter une ou plusieurs DEL. Et dans le cas d'une DEL unique, celle-ci peut être alimentée électriquement de façon à s'allumer et /ou à s'éteindre progressivement. Dans le cas où le module comprend plusieurs DELs, chacune peut ainsi s'allumer et/ou s'éteindre progressivement. Et, en outre, ou à la place, on peut prévoir que toutes les DELs ne s'allument pas et/ou ne s'éteignent en même temps, mais les unes après les autres (une par une, ou par des regroupements de x LEDs alimentées sélectivement en électricité).

On peut aussi prévoir, dans le cas où le module complémentaire comprend plusieurs DELs, que une ou plusieurs d'entre elles puisse rester en permanence allumées quand le module code est allumé.

Comme indiqué plus haut, le module complémentaire peut donc comporter une pluralité de DELs, aptes à s'allumer toutes ensembles avec une alimentation électrique variable, et/ou aptes à s'allumer sélectivement.

La première ligne de coupure oblique à double paliers horizontaux, dont un palier inférieur et un palier supérieur permet de limiter la portée du faisceau lumineux code dans la zone du palier supérieur, tandis que la zone du palier inférieur favorise un éclairage accru du bord de la chaussée.

Pour modifier les caractéristiques du faisceau lumineux code, pour son passage en feu d'autoroute la ou les DEL sont activées pour accroître la portée du faisceau lumineux code émis par le module correspondant. Les caractéristiques du faisceau lumineux code peuvent être modifiées à partir d'une structure du système d'éclairage qui est simple en étant limitée à la mise en oeuvre du module d'éclairage complémentaire, et en évitant l'utilisation de pièces mobiles pour modifier les caractéristiques du faisceau lumineux code. Cette faculté de modification des caractéristiques du faisceau lumineux code est obtenue facilement et à moindres coûts, et peut être générée progressivement par une activation individuellement sélective et progressive des DEL du module d'éclairage complémentaire, soit selon une valeur d'évolution constante soit selon une valeur d'évolution dépendante de l'environnement extérieur détecté par des moyens appropriés.

Un même boîtier est apte à loger un module d'éclairage code et un module d'éclairage complémentaire, voire encore un module d'éclairage route. Le module d'éclairage code et le module d'éclairage complémentaire sont aptes à être conjointement supportés en mobilité à l'intérieur du boîtier sans pour autant accroître outre mesure la complexité de la structure du système d'éclairage, afin offrir d'autres fonctions telle que du type virage tournant par exemple.

Le module d'éclairage code et le module d'éclairage complémentaire sont indifféremment logés dans le boîtier d'un même projecteur ou dans un boîtier respectif d'un projecteur qui leur est dédié.

Il est cependant préféré de loger le module d'éclairage code et le module d'éclairage complémentaire dans un même boîtier de projecteur, à l'intérieur duquel ils sont conjointement montés mobiles par l'intermédiaire d'un organe support commun, tel qu'une platine articulée sur le boîtier. Cette mobilité conjointe du module d'éclairage code et du module d'éclairage complémentaire permet notamment de corriger rigoureusement en simultanéité l'assiette des modules.

Selon une autre variante de réalisation, le module d'éclairage code et le module d'éclairage complémentaire sont individuellement montés mobiles à l'intérieur de boîtiers qui les reçoivent respectivement.

Le système d'éclairage comporte un module d'éclairage route pour l'émission d'un faisceau lumineux route à longue portée. Un tel module d'éclairage route est indifféremment logé à l'intérieur du boîtier recevant le module d'éclairage code et/ou le module d'éclairage complémentaire, ou à l'intérieur d'un boîtier d'un projecteur qui lui est dédié.

Le module route est apte à s'allumer progressivement ou instantanément.

Le module route comporte une pluralité de sources lumineuses, notamment des DELs, aptes à s'allumer toutes ensembles avec une alimentation électrique variable, et/ou aptes à s'allumer sélectivement.

De préférence, le système d'éclairage comprend des moyens de détection de l'environnement proche du véhicule, sous la dépendance desquels est placée l'activation des DEL du module complémentaire. De tels moyens de détection sont notamment du type optoélectronique, tel que caméra ou organe analogue, éventuellement complétés par des moyens de communication par ondes tels que dispositif de localisation satellitaire et/ou réseau de téléphonie cellulaire.

Le système d'éclairage comprend avantageusement des moyens de commande d'une fonction dite faisceau tournant, sous la dépendance desquels est placée l'activation individuelle des DEL du module d'éclairage complémentaire.

La modification du faisceau lumineux code émis consiste notamment à modifier sa portée angulaire par rapport au sol et/ou sa portée angulaire au regard d'un plan parallèle au sol et / ou son intensité lumineuse.

Selon une autre approche de la présente invention, il est proposé un procédé qui adapte des caractéristiques de l'éclairage que procurent les projecteurs d'un véhicule automobile, en fonction d'une observation du trafic et/ou de l'environnement proche du véhicule. Cette adaptation concerne plus particulièrement l'émission par le système d'éclairage du faisceau lumineux code, mais il est envisageable d'appliquer l'invention à l'adaptation d'un quelconque faisceau lumineux émis par un système d'éclairage à partir de l'activation sélective et individuelle d'une DEL ou d'une pluralité de DEL constituant la source lumineuse d'un module d'éclairage complémentaire.

Le système d'éclairage du véhicule automobile comprend notamment un ou plusieurs projecteurs qui intègrent chacun un ou plusieurs modules d'éclairage qui sont munis d'un système optique comprenant une source lumineuse et qui sont aptes à émettre divers faisceaux lumineux. Parmi ces faisceaux lumineux, on trouve notamment un faisceau de croisement et/ou un faisceau route longue portée et/ou un faisceau d'autoroute et/ou de ville, voire encore un feu antibrouillard et un feu de signalisation, ou tout autre faisceau lumineux émis par l'un des modules d'éclairage que comprend le système optique. Plus particulièrement et pour un même côté du véhicule, un seul projecteur est susceptible d'être installé, ce projecteur comprenant une pluralité de modules d'éclairage aptes à émettre respectivement un faisceau lumineux. De manière analogue au regard des modalités proposées par la présente invention, plusieurs projecteurs sont susceptibles d'être affectés à un même côté du véhicule, ces projecteurs comprenant un ou plusieurs modules d'éclairage aptes à émettre un faisceau lumineux qui sont répartis entre les projecteurs. Le système d'éclairage comprend par ailleurs de préférence des moyens de détection de l'environnement du véhicule, qui sont notamment aptes à détecter la présence d'un autre véhicule circulant en sens inverse ou dans le même sens.

Il est proposé par la présente invention de détecter l'environnement proche du véhicule par lesdits moyens de détection appropriés. Une telle opération de détection consiste à fournir une information de détection au moins relative au repérage de la présence ou non d'au moins un autre véhicule indifféremment suivi ou croisé à ne pas éblouir. Ces moyens de détection sont notamment, pris isolément ou en combinaison, des moyens optoélectroniques tels que du type caméra embarquée sur le véhicule, ou encore des moyens du type Système de Géolocalisation par Satellite (GPS pour Global Positioning System en anglais), ou encore des moyens de communication mettant en oeuvre un réseau de téléphonie cellulaire, ou tout autres moyens de détection aptes à fournir une information de détection au moins relative au repérage de la présence ou non d'au moins un autre véhicule indifféremment suivi ou croisé à ne pas éblouir, voire aussi une information de détection relative à l'environnement du véhicule, tel que par exemple relative à la présence ou non d'obstacles en bordure de route et/ou de l'éclairage environnant le véhicule, et/ou encore une information relative à la configuration de la route sur laquelle circule le premier véhicule, en vue notamment de détecter la présence de virages.

A partir d'une telle détection, la distance instantanée séparant le premier véhicule équipé du système d'éclairage de la présente invention de l'autre véhicule est comparée à au moins une valeur seuil de référence. Le cas échéant une valeur d'activation correspondante à la variation de distance entre la distance instantanée et la valeur seuil est déterminée. Pour l'exécution de cette étape, des moyens de calcul sont associés aux moyens de détection pour déterminer l'évolution de la distance séparant le premier véhicule de l'autre véhicule, le fait que l'autre véhicule soit un véhicule suivi et/ou croisé par rapport au premier véhicule, voire encore si l'autre véhicule est un véhicule approchant le premier véhicule sur une voie voisine suivant un même sens de circulation, notamment en cours d'une opération de doublement du premier véhicule par l'autre véhicule.

A partir de la dite distance instantanée qui a été déterminée, l'émission de l'un au moins des faisceaux lumineux émis par les modules d'éclairage du système d'éclairage est modifiée, pour au moins ajuster sa portée en fonction de la valeur d'activation.

Plus particulièrement au cours de l'étape consistant à modifier l'émission de l'un et/ou l'autre des dits faisceaux lumineux, le système d'éclairage permet de modifier l'émission en portée et/ou en intensité et/ou en amplitude du dit faisceau lumineux au moins, à partir d'une opération d'activation ou inversement de désactivation sélective d'au moins une DEL (Diode Electroluminescente ; LED pour Light emitting diode en anglais) d'un groupe de DEL constituant la source lumineuse du module d'éclairage complémentaire.

La variation d'éclairage entre l'émission de divers faisceaux est apte à être obtenue en l'absence de moyens mécaniques, avec pour avantage de simplifier la structure du projecteur. Cette absence d'appareillage mécanique correspond plus particulièrement à l'absence de caches mobiles équipés de moyens de guidage et de manoeuvre qui sont logés dans un projecteur bi-fonction permettant le passage, à partir d'un même module d'éclairage, entre un faisceau lumineux route et un faisceaux lumineux de croisement. L'exploitation du module d'éclairage complémentaire permet de s'exonérer d'un tel appareillage mécanique, les variations de faisceaux lumineux étant obtenues à partir de l'activation sélective des DEL du module d'éclairage complémentaire. Seul le ou les modules d'éclairage sont susceptibles d'être montés mobiles à l'intérieur du boîtier d'un projecteur, en vue notamment d'autoriser une correction d'assiette du ou des modules d'éclairage.

L'exploitation du module d'éclairage complémentaire est apte à procurer en outre d'autres fonctions spécifiques d'éclairage, à partir de l'activation individuelle et sélective des DEL qui composent sa source lumineuse en coopération avec un module d'éclairage qui émet un feu de croisement. De telles fonctions d'éclairage sont notamment relatives à une fonction de feu d'autoroute et/ou de feu de ville, ou encore une fonction de lumière virage mobile et plus particulièrement une fonction de virage tournant. Les moyens de correction d'assiette du ou des modules d'éclairage qu'il loge sont préférentiellement conservés.

La structure du projecteur est simplifiée, y compris pour l'obtention d'un nombre important de fonctions d'éclairage susceptibles d'être obtenues, notamment au regard de l'intensité, de la portée et/ou de l'amplitude des faisceaux lumineux émis par le projecteur, ou encore au regard de la prise en compte de l'environnement extérieur du véhicule, telles que la présence ou non d'un autre véhicule ou l'environnement ambiant proche du véhicule. La standardisation du projecteur est aisée, tout en offrant la faculté de procurer sélectivement l'une ou l'autre de ces fonctions d'éclairage. Les libertés et les facilités d'agencement du projecteur, d'organisation de son esthétique globale et/ou d'implantation des différents modules d'éclairage à l'intérieur du boîtier du projecteur sont accrues.

Les variations d'éclairage entre les divers faisceaux émis par le projecteur sont aptes à être obtenues progressivement et sélectivement par activation ou désactivation successive des DEL du module d'éclairage complémentaire, dont l'exploitation est notamment associé au module d'éclairage d'émission d'un feu de croisement. Le confort visuel du conducteur est accru. De même lors de l'exploitation de fonctions d'éclairage spécifiques, telles que les fonctions dites d'autoroute et/ou feu de ville et/ou faisceau tournant, ou tout autre fonction permettant d'accroître le confort du conducteur, ces diverses fonctions sont aptes à être obtenues à partir d'une activation sélective des DEL du module d'éclairage complémentaire.

Selon une forme d'exploitation du module d'éclairage complémentaire, l'activation sélective des DEL composant sa source lumineuse consiste à prendre en compte une éventuelle instruction de commande d'une fonction dite faisceau tournant apte à modifier l'émission de l'un et/ou l'autre des dits faisceaux lumineux émis par le système d'éclairage, selon une information de détection relative à l'évolution de la configuration de la voie de circulation. Une telle exploitation du module d'éclairage complémentaire est susceptible d'être mise en oeuvre dans le cas où le premier véhicule suit un autre véhicule ou par analogie qu'il se fait doubler par un autre véhicule.

L'activation sélective des DEL du module d'éclairage complémentaire est susceptible de prendre en compte une éventuelle instruction de commande d'une fonction chronométrique, apte à modifier l'émission d'un faisceaux lumineux émis par le système plus ou moins rapidement selon diverses informations de détection, comprenant non seulement la valeur d'activation, mais aussi au moins une information de détection relative à l'évolution de la configuration de la voie de circulation.

L'activation sélective des DEL du module d'éclairage complémentaire permet le passage de l'émission d'un feu de croisement à un feu de route. Une telle opération consiste, à partir d'une détermination d'une valeur d'activation autorisant le passage de l'émission d'un feu de croisement à un feu d'autoroute, puis à un faisceau route. Une telle opération consiste à activer sélectivement et progressivement les DEL du module d'éclairage complémentaire pour émettre le feu autoroute, jusqu'à accroître la portée du faisceau qu'il émet à une portée de l'ordre de celle d'une information de détection correspondant à une absence de détection d'un autre véhicule à ne pas éblouir. Un module d'éclairage affecté à l'émission d'un faisceau route est mis en oeuvre par l'activation progressive des DEL composant sa source lumineuse, en poursuivant simultanément la modification des caractéristiques du faisceau lumineux émis par le module d'éclairage complémentaire. Optionnellement après la mise en oeuvre du module d'éclairage apte à émettre le feu de route, une étape finale réside dans la désactivation des DEL composant la source lumineuse du module d'éclairage complémentaire et du module d'éclairage émettant le feu de croisement.

Plus spécifiquement, l'activation des DEL du module d'éclairage complémentaire consiste à accroître progressivement la portée angulaire du faisceau par rapport au sol jusqu'à atteindre une valeur de l'ordre 0,75% pour un accroissement progressif de son intensité lumineuse jusqu'à atteindre 100 %. L'émission du faisceau de croisement est progressivement réduite en limitant sa portée angulaire par rapport au sol jusqu'à atteindre une valeur de l'ordre 0,25%.

Plus spécifiquement encore l'accroissement de la portée du feu de croisement et du feu d'autoroute à partir de l'activation sélective des DEL du module d'éclairage complémentaire, consiste à accroître la portée angulaire du faisceau émis par le système d'éclairage par rapport au sol jusqu'à atteindre une valeur de l'ordre 3 % en maintenant une intensité lumineuse de 100 %. L'émission du feu de croisement par le module d'éclairage correspondant est progressivement réduite jusqu'à limiter sa portée angulaire par rapport au sol à une valeur nulle.

Inversement et pour le passage de l'émission d'un feu de route à un feu de croisement, la détermination d'une valeur d'activation non nulle contraint au passage de l'émission d'au moins un jeu de route, voire aussi accessoirement accompagné d'un feu de croisement et d'un feu d'autoroute, à un feu de croisement seulement. On comprendra que le dit caractère accessoire de l'accompagnement de l'émission du feu d'autoroute et du feu de croisement dépend du maintien ou non de l'activation des DEL des modules d'éclairage correspondant lorsque le projecteur émet un faisceau lumineux de route. Le passage de l'émission d'un feu de route à un feu de croisement consiste à réduire jusqu'à extinction l'émission du feu de route émis par au moins un module d'éclairage dédié à l'émission d'un feu de route, par désactivation des DEL composant sa source lumineuse. Le cas échéant s'il est activé, à simultanément réduire progressivement jusqu'à extinction la portée et l'intensité lumineuse de l'émission du feu d'autoroute émis à partir de l'activation des DEL du module d'éclairage complémentaire, en fonction des informations détectées relatives au moins à l'estimation de la distance instantanée séparant le premier véhicule de l'autre véhicule, sinon relative à la valeur d'activation et/ou à la valeur seuil de référence. Le cas échéant s'il n'est pas activé, à simultanément activer l'émission du feu de croisement émis par au moins le module d'éclairage dédié par activation des DEL composant sa source lumineuse.

Il pourra être notamment appliqué les règles suivantes relatives aux caractéristiques du feu de croisement et du feu d'autoroute lors du passage de l'émission par le projecteur d'un feu de croisement à un feu de route et inversement.

| **Distance vehicle** | **Position coupure** | **Leveling** | **Leveling** | **Intensité Motorway** |
|---|---|---|---|---|
| | | **(% rad.)** | ° | |
| < 75 m | 1% | 0.00% | 0.00 | 0.00% |
| 75 | 1.00% | 0.00% | 0.00 | 0.00% |
| 100 | 0.75% | 0.25% | 0.14 | 15.00% |
| 125 | 0.60% | 0.40% | 0.23 | 30.00% |
| 150 | 0.50% | 0.50% | 0.29 | 50.00% |
| 175 | 0.43% | 0.57% | 0.33 | 60.00% |
| 200 | 0.38% | 0.63% | 0.36 | 66.00% |
| 250 | 0.30% | 0.70% | 0.40 | 80.00% |
| 300 | 0.25% | 0.75% | 0.43 | 100.00% |
| 350 | 0.21% | 0.79% | 0.45 | 100.00% |
| 400 | 0.19% | 0.81% | 0.47 | 100.00% |
| 500 | 0.15% | 0.85% | 0.49 | 100.00% |
| 600 | 0.13% | 0.88% | 0.50 | 100.00% |
| > 600 | N/A | 3.00% | 1.72 | 100.00% |

De préférence, parmi les informations détectées provoquant l'activation ou inversement la désactivation d'au moins l'un des DEL composant la source lumineuse de l'un au moins des modules d'éclairage sont comprises, isolément ou en combinaison la distance de séparation instantanée et/ou la vitesse de variation entre deux distances de séparation instantanée successives entre le premier véhicule et au moins un autre véhicule circulant indifféremment sur une même voie de circulation, sur des voies de circulation voisines suivant un même sens de circulation, et/ou sur des voies de circulation à sens inverse, l'autre véhicule pris en compte étant l'autre véhicule le plus proche.

Plus spécifiquement au regard de l'exploitation des informations relatives à la présence ou non d'obstacles sur le bord ou en surplomb de la route, le procédé consiste à exploiter les informations détectées comprenant des informations relatives à la nature de l'environnement ambiant du premier véhicule aptes à déterminer la présence ou non d'obstacles sur le bord ou en surplomb de la route. Plusieurs modules d'éclairage sont aptes en combinaison à émettre un feu de route, dont au moins un premier module d'éclairage apte à émettre un feu de route à faible amplitude et au moins un deuxième module d'éclairage apte à émettre un feu de route à large amplitude. L'un de ces modules d'éclairage est avantageusement constitué du module d'éclairage complémentaire, et notamment le module d'éclairage émettant un faisceau route de faible amplitude. On comprendra que les notions de faible et de large amplitude sont à considérer l'une au regard de l'autre, et que des modules d'éclairage en nombre quelconque sont susceptibles d'être utilisés dès lors que l'amplitude du feu de route qu'ils émettent varie de faible à large de l'un à l'autre de ces modules d'éclairage. En cas de détection de dits obstacles, la source lumineuse du module d'éclairage apte à émettre un feu de route à faible amplitude est activée pour établir une première limite de visibilité prise en compte par les informations de détection. Puis la source lumineuse du module d'éclairage apte à émettre un feu de route à large amplitude est activée pour établir une deuxième limite de visibilité prise en compte par les informations de détection.

Selon une variante de réalisation, la variation d'éclairage résultant de la mise en oeuvre sélective des modules d'éclairage affectés à l'émission du feu de route est susceptible de prendre en compte en continue selon une valeur de temps prédéterminée la première et la deuxième limite de visibilité pour la comparer à une limite de visibilité de référence autorisant ou non l'activation de la source lumineuse du module d'éclairage apte à émettre un feu de route à large amplitude en fonction de la présence ou non de dits obstacles. Lesdits obstacles sont notamment des arbres en milieu naturel.

Selon une autre variante de réalisation et dans le cas où les moyens de détection comprennent un système de géolocalisation satellitaire, la présence des dits obstacles est susceptible d'être connue à partir de ces moyens. Dans ce cas, la variation d'éclairage résultant de la mise en oeuvre sélective du ou des modules d'éclairage affectés à l'émission du feu de route à faible amplitude est susceptible d'être déterminée en fonction des informations de détection fournies par le système de géolocalisation satellitaire, la source lumineuse du ou des modules d'éclairage aptes à émettre le feu de route à faible amplitude étant maintenue activée en permanence jusqu'à la fourniture d'une information d'absence des dits obstacles par le système de géolocalisation satellitaire.

Plus spécifiquement, des informations relatives à la configuration de la voie de circulation, et notamment en cas de circulation du premier véhicule sur une route sinueuse, sont susceptibles d'être exploitées pour l'activation sélective des DEL du module d'éclairage complémentaire. Les informations détectées comprennent notamment des informations relatives à l'évolution de la configuration de la voie sur laquelle circule le premier véhicule déterminant la présence ou non d'au moins un virage. Plusieurs modules d'éclairage sont aptes en combinaison à émettre un feu de route, dont au moins un premier module d'éclairage apte à émettre un feu de route à faible amplitude, tel que le module d'éclairage complémentaire, et au moins un deuxième module d'éclairage apte à émettre un feu de route à large amplitude. En cas de détection d'au moins un dit virage, la source lumineuse du module d'éclairage apte à émettre un feu de route à faible amplitude est désactivée au moins partiellement sinon complètement, tandis que la source lumineuse du module d'éclairage apte à émettre un feu de route à large amplitude est maintenue activée en fonction de la présence ou non d'un dit virage au moins.

La présente invention vise notamment à éclairer à gauche sous la coupure code avec un faisceau à coupure qui est aligné.

L'utilisation de DEL, dans la présente invention, est avantageuse, les allumages progressifs par exemple étant peu praticables.

La présente invention sera mieux comprise à la lecture de la description qui va en être faite en relation avec les figures des planches annexées, dans lesquelles :
- La fig.1 est une illustration de face d'un exemple de réalisation d'un projecteur que comprend un système d'éclairage de la présente invention.
- Les fig.2 et fig.3 sont des organigrammes qui illustrent respectivement différentes situations susceptibles de mettre en oeuvre un module d'éclairage complémentaire que comprend le système d'éclairage de la présente invention.

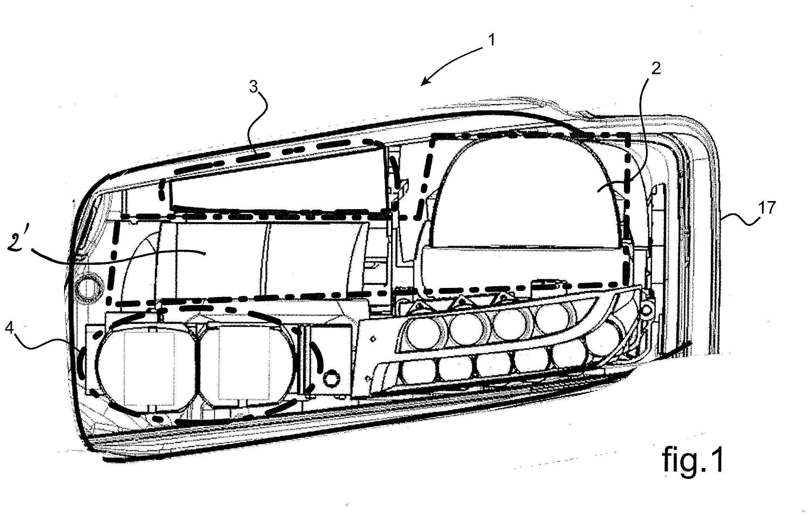

Sur la fig.1, un projecteur 1 est installé sur un premier véhicule pour l'éclairage de la route en vision nocturne. Ce projecteur 1 comprend un boîtier 17 qui loge une pluralité de modules d'éclairage 2,2',3,4 dont les systèmes optiques comprennent chacun une pluralité de DEL. A titre d'exemple :
- un module d'éclairage route 4 est apte à émettre un feu de route longue portée, et comporte deux DEL. Pour plus de détails sur les composants de ce module , on pourra se reporter, selon un premier mode de réalisation, au brevet français déposé le 11 mars 2008 sous le numéro de dépôt 08/ 01333, ou, selon un second mode de réalisation alternatif, au brevet EP - 1 881 264.
- deux modules d'éclairage code 2,2' sont aptes à émettre un feu de croisement à courte portée, et comportent chacun entre une et trois ou quatre DEL. A noter dans cet exemple que le module 2 émet un faisceau à coupure à deux paliers horizontaux, et que le module 2' émet, lui, un faisceau à coupure plate (correspondant sensiblement au palier inférieur du faisceau émis par le module 2). Le faisceau lumineux émis est dons la superposition des faisceaux émis par chacun des modules 2 et 2' et correspond au feu de croisement comporte une première ligne de coupure oblique à double paliers horizontaux, dont un palier inférieur et un palier supérieur.

Une configuration alternative des modules code 2 et 2' est que chacun des modules émette un faisceau avec une même coupure à deux paliers horizontaux.

Pour plus de détails sur les composants de ces modules, on pourra se reporter au brevet EP - 1 434 002 pour chacun des deux modules 2 et 2' dans la variante où ils émettent tous les deux un faisceau à coupure à double paliers horizontaux.

Dans la variante où le module 2' émet simplement un faisceau à coupure plate, ce module peut avoir la configuration décrite dans le brevet EP- 1 843 085, ou celle décrite dans le brevet européen déposé le 19 juin 2008 sous le numéro de dépôt EP 08 158537.4, correspondant au brevet français déposé le 25 juin 2007 sous le numéro de dépôt FR 07 04559, l'autre module 2 ayant la configuration décrite dans le brevet EP - 1 434 002 précité.
- un module d'éclairage complémentaire 3 est apte à émettre un feu d'autoroute et comporte une ou deux DEL. Pour plus de détails sur les composants de ce module, on pourra se reporter, selon un premier mode de réalisation, au brevet EP- 1 762 776, se rapportant à une solution optique ayant recours à une lentille, ou, selon un second mode de réalisation alternatif, au brevet EP- 1 870 633, se rapportant à une solution optique ayant recours à des réflecteurs.

Ce module d'éclairage complémentaire 3 est apte à émettre un faisceau lumineux comportant une deuxième ligne de coupure alignée sur le palier inférieur de la première ligne de coupure. Les DEL qui composent sa source lumineuse sont activables sélectivement et individuellement pour notamment modifier les caractéristiques du faisceau lumineux émis par le module d'éclairage 4 émettant le feu de croisement.

Le nombre de modules d'éclairage et de DEL affectées à chacun d'eux est donné à titre indicatif et est susceptible de varier en fonction de la perfection des résultats et/ou des fonctions souhaités. Notamment, plusieurs modules d'éclairage sont susceptibles d'être affectés à l'émission d'un même type de faisceau, et le nombre de DEL affectées à chacun des modules d'éclairage est susceptible d'être plus ou moins important en fonction de la progressivité souhaitée de la variation de l'émission des faisceaux lumineux.

Les modules d'éclairage code 2,2' et le module d'éclairage complémentaire 3 sont conjointement montés mobiles à l'intérieur du boîtier 17 par l'intermédiaire d'une platine support commune mue par un actionneur non représenté. Ce montage en mobilité vise à permettre l'obtention de diverses fonctions, telle que de correction d'assiette, des modules d'éclairage code 2,2' et du module d'éclairage complémentaire 3. Le montage commun du module d'éclairage code 2 et du module d'éclairage complémentaire 3 sur un même support garanti leur mobilité similaire et simultanée par rapport au boîtier 17, et permet de limiter le nombre d'actionneurs nécessaires.

Le module d'éclairage complémentaire 3 est principalement exploitable pour faire varier progressivement les caractéristiques du faisceau lumineux émis par le projecteur. Plus particulièrement, cette modification réside dans une variation des caractéristiques du feu de croisement, pour l'émission par le projecteur d'un feu de croisement à un feu d'autoroute et inversement, voire encore pour une modification de l'amplitude d'émission du feu de croisement en fonction de la position d'un autre véhicule à ne pas éblouir par rapport au véhicule équipé du système d'éclairage de la présente invention. L'exploitation du module complémentaire 3 pour faire varier les caractéristiques du faisceau lumineux émis par le projecteur, notamment par le module d'éclairage code, permet de se soustraire à des mécanismes habituellement logé dans les modules d'éclairage bi-fonction code/route.

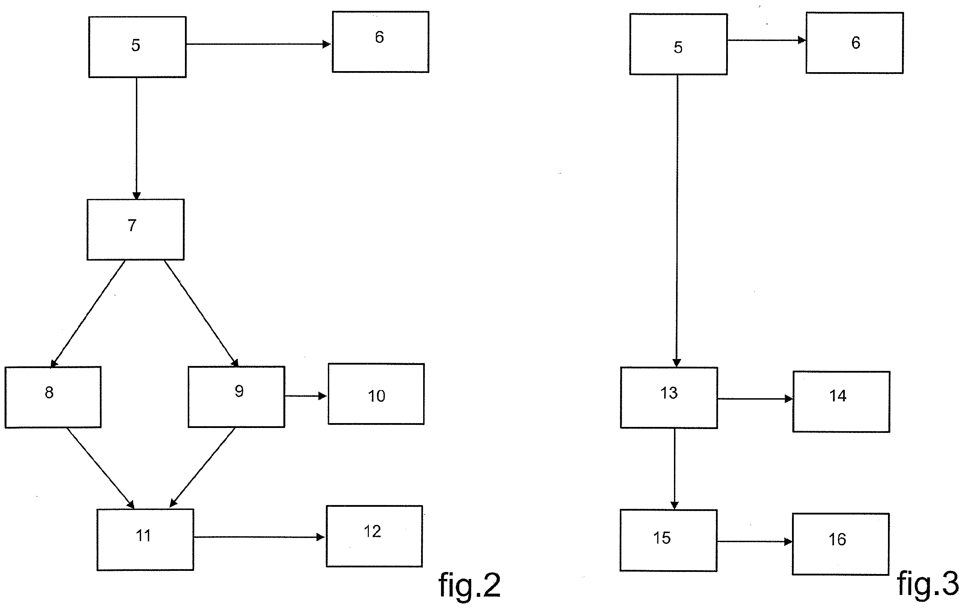

Sur la fig.2, une première information de détection 5 est fournie par des moyens de détection équipant le véhicule, moyens électroniques et système de géolocalisation satellitaire notamment. Cette première information de détection 5 correspond à une absence de véhicule dans un champ de détection correspondant à une distance supérieure à 600 m. Dans ce cas, une première information d'activation 6 des DEL du projecteur est générée. Le projecteur émet des faisceaux lumineux du type feu de croisement d'une émission de 100 %, optionnellement du type feu d'autoroute d'une émission à 100 %, du type feu de route d'une émission à 100 %. La position de relevage du faisceau de type feu de croisement correspond à une valeur de 3 % de portée angulaire par rapport au sol.

Une deuxième information de détection 7 est fournie par les moyens de détection, correspondant à la présence d'un autre véhicule. Par exemple et selon un premier cas 8, un autre véhicule circulant en sens inverse est détecté comme croisant le premier véhicule à une distance inférieure à 600 m. Par exemple encore et selon un deuxième cas 9 un autre véhicule est suivi par le premier véhicule et sa présence est détectée par les moyens de détection. Dans ces cas 8,9, une deuxième information d'activation 10 des DEL du projecteur est générée. Le projecteur cesse d'émettre le feu de route par le module d'éclairage route, l'émission du feu d'autoroute par le module complémentaire et la position de relevage décroissement progressivement selon la distance de séparation entre les deux véhicules, et les DEL du feu de croisement sont activées à 100 %. Puis une troisième information de détection 11 indiquant que l'autre véhicule est proche du premier véhicule, une troisième information d'activation 12 est générée pour que l'émission seule à 100 % du feu de croisement soit autorisée.

Sur la fig.3, une première information de détection 6 correspond à une absence de véhicule dans un champ de détection de l'ordre d'une distance supérieure à 600 m. Dans ce cas, une première information d'activation 6 des DEL du projecteur est générée. Le projecteur émet des faisceaux lumineux du type feu de croisement d'une émission de 100 %, optionnellement du type feu d'autoroute d'une émission à 100 %, et du type feu de route d'une émission à 100 %. La position de relevage du faisceau de type feu de croisement correspond à une valeur de 3 % de portée angulaire par rapport au sol.

Un autre véhicule double le premier véhicule, et une quatrième information de détection 13 est fournie par les moyens de détection, correspondant à la présence de l'autre véhicule dont la distance de séparation du premier véhicule est de l'ordre inférieure à 80 m. Dans ce cas, une quatrième information d'activation 14 des DEL du projecteur est générée. L'émission du feu de croisement est maintenue, tandis que les DEL des modules d'éclairage complémentaire aptes à émettre le feu d'autoroute et le module d'éclairage feu de route sont désactivées. La position de relevage est amenée à 0 % d'élévation angulaire par rapport au sol. L'autre véhicule s'éloignant du premier véhicule, une cinquième information de détection 15 indique la distance instantanée séparant le premier véhicule de l'autre véhicule. Une cinquième information d'activation 16 induit une activation progressive des DEL et un relevage progressif des modules d'éclairage code 2,2'.

## Revendications

1. Système d'éclairage pour véhicule automobile comprenant au moins un projecteur (17) logeant au moins un module d'éclairage associant au moins une source lumineuse associée à des moyens optiques pour l'émission d'un faisceau lumineux, au moins l'un des modules d'éclairage étant un module d'éclairage code (2) pour l'émission d'un faisceau lumineux code comportant une première ligne de coupure oblique à double paliers sensiblement horizontaux dont un palier inférieur et un palier supérieur, **caractérisé en ce qu'**il comprend au moins un module d'éclairage complémentaire (3) qui est agencé pour émettre un faisceau d'autoroute comportant une deuxième ligne de coupure alignée sur le palier inférieur de la première ligne de coupure, la source lumineuse du module d'éclairage complémentaire étant composée d'au moins une DEL activable en fonction de l'observation du trafic, notamment de la distance avec les autres véhicules dans un environnement proche, pour modifier les caractéristiques du faisceau lumineux émis par le ou les module(s) d'éclairage code (2) et accroître la portée du faisceau lumineux émis par le ou les module(s) d'éclairage code (2).

2. Système selon la revendication précédente, **caractérisé en ce que** le faisceau code est obtenu avec un module d'éclairage code (2) ou une combinaison de , notamment deux, modules d'éclairage code (2,2').

3. Système selon l'une des revendications précédentes, **caractérisé en ce que** le module complémentaire (3) est apte à s'allumer progressivement ou instantanément.

4. Système selon l'une des revendications précédentes, **caractérisé en ce que** le module complémentaire (3) comporte une pluralité de DELs, aptes à s'allumer toutes ensembles avec une alimentation électrique variable, et/ou aptes à s'allumer sélectivement.

5. Système selon l'une des revendications précédentes, **caractérisé en ce que** le(s) module(s) code (2,2')) et le module complémentaire (3) sont montés mobiles de façon synchrone.

6. Système selon l'une des revendications précédentes, **caractérisé en ce que** le(s) module(s) code (2,2') et le module complémentaire (3) sont logés dans un même projecteur (17).

7. Système d'éclairage selon la revendication précédente, **caractérisé en ce que** le(s) module(s) d'éclairage code (2,2') et le module d'éclairage complémentaire (3) sont conjointement montés mobiles à l'intérieur du boîtier (17) par l'intermédiaire d'une platine support commune mue par au moins un actionneur.

8. Système d'éclairage selon l'une quelconque des revendications 1 à 5, **caractérisé en ce que** le(s) module(s) d'éclairage code (2) et le module d'éclairage complémentaire (3) sont chacun montés mobiles sur une platine spécifique mue par au moins un actionneur.

9. Système d'éclairage selon l'une quelconque des revendications précédentes, **caractérisé en ce qu'**il comporte un module d'éclairage route (4) pour l'émission d'un faisceau lumineux route, notamment indifféremment logé à l'intérieur du boîtier (17) recevant le(s) module(s) d'éclairage code (2,2') et/ou le module d'éclairage complémentaire (3), ou à l'intérieur d'un boîtier d'un projecteur qui lui est dédié.

10. Système d'éclairage selon la revendication précédente, **caractérisé en ce que** le module route (4) est apte à s'allumer progressivement ou instantanément.

11. Système d'éclairage selon la revendication 9 ou 10, **caractérisé en ce que** le module route (4) comporte une pluralité de sources lumineuses, notamment des DELs, aptes à s'allumer toutes ensembles avec une alimentation électrique variable, et/ou aptes à s'allumer sélectivement.

12. Système d'éclairage selon l'une quelconque des revendications précédentes, **caractérisé en ce qu'**il comprend des moyens de commande d'une fonction dite faisceau tournant sous la dépendance desquels est également placée l'activation individuelle de la ou des DELs du module d'éclairage complémentaire (3).

13. Procédé de mise en oeuvre d'un système d'éclairage selon l'une quelconque des revendications précédentes, **caractérisé en ce qu'**il consiste, à partir d'informations relatives à la détection de l'environnement du véhicule, à modifier l'émission du faisceau lumineux code émis par le système d'éclairage à partir de l'activation ou non de la ou des DEL que comporte le module d'éclairage complémentaire, où la modification du faisceau code émis réside dans l'émission d'un faisceau d'autoroute par activation de la ou des DEL que comporte le module d'éclairage complémentaire (3).

14. Procédé selon la revendication 13, **caractérisé en ce que** la modification du faisceau lumineux code émis consiste à modifier sa portée angulaire par rapport au sol et/ou sa portée angulaire au regard d'un plan parallèle au sol et/ou à modifier son intensité lumineuse.

## Patentansprüche

1. Beleuchtungssystem für ein Kraftfahrzeug, welches mindestens einen Scheinwerfer (17) umfasst, der mindestens ein Beleuchtungsmodul aufnimmt, das mindestens eine zugeordnete Lichtquelle mit optischen Mitteln zur Emission eines Lichtbündels kombiniert, wobei mindestens eines der Beleuchtungsmodule ein Abblendlichtmodul (2) zur Emission eines Abblendlichtbündels ist, das eine erste schräge Hell-Dunkel-Grenze mit zwei im Wesentlichen horizontalen Stufen aufweist, darunter eine untere Stufe und eine obere Stufe, **dadurch gekennzeichnet, dass** es mindestens ein komplementäres Beleuchtungsmodul (3) umfasst, welches dazu eingerichtet ist, ein Autobahnlichtbündel zu emittieren, das eine zweite Hell-Dunkel-Grenze aufweist, die zur unteren Stufe der ersten Hell-Dunkel-Grenze ausgerichtet ist, wobei die Lichtquelle des komplementären Beleuchtungsmoduls aus mindestens einer LED besteht, die in Abhängigkeit von der Beobachtung des Verkehrs, insbesondere des Abstands von den anderen Fahrzeugen in einer nahen Umgebung, aktivierbar ist, um die Eigenschaften des von dem oder den Abblendlichtmodul(en) (2) emittierten Lichtbündels zu ändern und die Reichweite des von dem oder den Abblendlichtmodul(en) (2) emittierten Lichtbündels zu vergrößern.

2. System nach dem vorhergehenden Anspruch, **dadurch gekennzeichnet, dass** das Abblendlichtbündel mit einem Abblendlichtmodul (2) oder einer Kombination von mehreren, insbesondere zwei, Abblendlichtmodulen (2, 2') erhalten wird.

3. System nach einem der vorhergehenden Ansprüche, **dadurch gekennzeichnet, dass** das komplementäre Modul (3) in der Lage ist, allmählich oder augenblicklich aufzuleuchten.

4. System nach einem der vorhergehenden Ansprüche, **dadurch gekennzeichnet, dass** das komplementäre Modul (3) mehrere LEDs aufweist, die in der Lage sind, alle zusammen mit einer variablen Stromversorgung aufzuleuchten, und/oder in der Lage sind, selektiv aufzuleuchten.

5. System nach einem der vorhergehenden Ansprüche, **dadurch gekennzeichnet, dass** das (die) Abblendlichtmodul(e) (2, 2') und das komplementäre Modul (3) synchron bewegbar angebracht sind.

6. System nach einem der vorhergehenden Ansprüche, **dadurch gekennzeichnet, dass** das (die) Abblendlichtmodul(e) (2, 2') und das komplementäre Modul (3) in demselben Scheinwerfer (17) untergebracht sind.

7. Beleuchtungssystem nach dem vorhergehenden Anspruch, **dadurch gekennzeichnet, dass** das (die) Abblendlichtmodul(e) (2, 2') und das komplementäre Beleuchtungsmodul (3) im Inneren des Gehäuses (17) über eine gemeinsame Trägerplatte, die von mindestens einem Aktuator bewegt wird, zusammen bewegbar angebracht sind.

8. Beleuchtungssystem nach einem der Ansprüche 1 bis 5, **dadurch gekennzeichnet, dass** das (die) Abblendlichtmodul(e) (2) und das komplementäre Beleuchtungsmodul (3) jeweils auf einer speziellen Platte, die von mindestens einem Aktuator bewegt wird, bewegbar angebracht sind.

9. Beleuchtungssystem nach einem der vorhergehenden Ansprüche, **dadurch gekennzeichnet, dass** es ein Fernlichtmodul (4) zur Emission eines Fernlichtbündels aufweist, das insbesondere gleichfalls im Inneren des Gehäuses (17) untergebracht ist, welches das (die) Abblendlichtmodul(e) (2, 2') und/oder das komplementäre Beleuchtungsmodul (3) aufnimmt, oder im Inneren eines Gehäuses eines Schweinwerfers, der speziell für es bestimmt ist.

10. Beleuchtungssystem nach dem vorhergehenden Anspruch, **dadurch gekennzeichnet, dass** das Fernlichtmodul (4) in der Lage ist, allmählich oder augenblicklich aufzuleuchten.

11. Beleuchtungssystem nach Anspruch 9 oder 10, **dadurch gekennzeichnet, dass** das Fernlichtmodul (4) mehrere Lichtquellen, insbesondere LEDs, aufweist, die in der Lage sind, alle zusammen mit einer variablen Stromversorgung aufzuleuchten, und/oder in der Lage sind, selektiv aufzuleuchten.

12. Beleuchtungssystem nach einem der vorhergehenden Ansprüche, **dadurch gekennzeichnet, dass** es Mittel zur Steuerung einer sogenannten Kurvenlichtfunktion umfasst, in Abhängigkeit von denen auch die individuelle Aktivierung der LED oder der LEDs des komplementären Beleuchtungsmoduls (3) erfolgt.

13. Verfahren zur Anwendung eines Beleuchtungssystems nach einem der vorhergehenden Ansprüche, **dadurch gekennzeichnet, dass** es darin besteht, anhand von Informationen, die sich auf die Erkennung der Umgebung des Fahrzeugs beziehen, die Emission des von dem Beleuchtungssystem emittierten Abblendlichtbündels anhand der Aktivierung oder Nichtaktivierung der LED oder der LEDs, welche das komplementäre Beleuchtungsmodul aufweist, zu ändern, wobei die Änderung des emittierten Abblendlichtbündels in der Emission eines Autobahnlichtbündels durch Aktivierung der LED oder der LEDs, welche das komplementäre Beleuchtungsmodul (3) aufweist, besteht.

14. Verfahren nach Anspruch 13, **dadurch gekennzeichnet, dass** die Änderung des emittierten Abblendlichtbündels darin besteht, seinen Winkelbereich in Bezug auf den Boden und/oder seinen Winkelbereich hinsichtlich einer zum Boden parallelen Ebene zu ändern und/oder seine Lichtstärke zu ändern.

## Claims

1. Lighting system for a motor vehicle comprising at least one headlamp (17) housing at least one lighting module combining at least one light source associated with optical means for emitting a beam of light, at least one of the lighting modules being a low-beam lighting module (2) for emitting a low-beam beam of light comprising a first oblique cutoff line with two substantially horizontal levels, one being a lower level and one an upper level, **characterized in that** it comprises at least one additional lighting module (3) which is designed to emit a motorway-driving beam comprising a second cutoff line aligned with the lower level of the first cutoff line, the light source of the additional lighting module being made up of at least one LED that can be activated according to the traffic observed, notably according to the distance from the other vehicles in the close surroundings, so as to modify the characteristics of the beam of light emitted by the low-beam lighting module or modules (2) and increase the range of the beam of light emitted by the low-beam lighting module or modules (2).

2. System according to the preceding claim, **characterized in that** the low beam is obtained using one low-beam lighting module (2) or a combination of, notably two, low-beam lighting modules (2, 2').

3. System according to one of the preceding claims, **characterized in that** the additional module (3) is able to illuminate gradually or instantly.

4. System according to one of the preceding claims, **characterized in that** the additional module (3) comprises a plurality of LEDs which are able all to illuminate together with a variable electrical power supply, and/or able to illuminate selectively.

5. System according to one of the preceding claims, **characterized in that** the low-beam module or modules (2, 2') and the additional module (3) are mounted with the ability to move synchronously.

6. System according to one of the preceding claims, **characterized in that** the low-beam module or modules (2, 2') and the additional module (3) are housed in the one same headlight (17).

7. Lighting system according to the preceding claim, **characterized in that** the low-beam lighting module or modules (2, 2') and the additional lighting module (3) are jointly mounted with the ability to move inside the housing (17) via a common supporting mounting plate that is moved by at least one actuator.

8. Lighting system according to any one of Claims 1 to 5, **characterized in that** the low-beam lighting module or modules (2) and the additional lighting module (3) are each mounted with the ability to move on a specific mounting plate that is moved by at least one actuator.

9. Lighting system according to any one of the preceding claims, **characterized in that** it comprises a high-beam lighting module (4) for emitting a high-beam beam of light, notably housed either inside the housing (17) that accommodates the low-beam lighting module or modules (2, 2') and/or the additional lighting module (3), or inside a housing of a headlight that is specific to it.

10. Lighting system according to the preceding claim, **characterized in that** the high-beam module (4) is able to illuminate gradually or instantaneously.

11. Lighting system according to Claim 9 or 10, **characterized in that** the high-beam module (4) comprises a plurality of light sources, notably LEDs, which are able to all illuminate together with a variable electrical power supply and/or able to illuminate selectively.

12. Lighting system according to any one of the preceding claims, **characterized in that** it comprises means for controlling a so-called bending-light beam function under the dependency of which control means the individual activation of the LED or LEDs of the additional lighting module (3) is also placed.

13. Method for implementing a lighting system according to any one of the preceding claims, **characterized in that** it consists, on the basis of information relating to detection of the vehicle's environment, in modifying the emission of the low-beam beam of light emitted by the lighting system on the basis of whether or not the LED or LEDs that the additional lighting module comprises is or are activated, the modification of the low beam emitted consisting in the emission of a motorway beam by activating the LED or LEDs that the additional lighting module (3) comprises.

14. Method according to Claim 13, **characterized in that** the modification of the low-beam beam of light emitted consists in modifying its angular range relative to the ground and/or its angular range relative to a plane parallel to the ground, and/or in modifying its light intensity.
